(19) Europäisches Patentamt
European Patent Office
Office européen des brevets

(11)  EP 1 794 215 B1

(12)  EUROPÄISCHE PATENTSCHRIFT

(45) Veröffentlichungstag und Bekanntmachung des Hinweises auf die Patenterteilung:
**31.07.2013  Patentblatt 2013/31**

(21) Anmeldenummer: 05790136.5

(22) Anmeldetag: **17.09.2005**

(51) Int Cl.:
*C08J 3/22* *(2006.01)*

(86) Internationale Anmeldenummer:
**PCT/EP2005/010054**

(87) Internationale Veröffentlichungsnummer:
**WO 2006/032423 (30.03.2006 Gazette 2006/13)**

(54) **POLYESTER-FARBMITTELKONZENTRAT**

POLYESTER COLORANT CONCENTRATE

CONCENTRE DE COLORANT / POLYESTER

(84) Benannte Vertragsstaaten:
**CH DE ES FR GB IT LI TR**

(30) Priorität: **21.09.2004   DE 102004045639**

(43) Veröffentlichungstag der Anmeldung:
**13.06.2007   Patentblatt 2007/24**

(73) Patentinhaber: **Clariant Masterbatches (Deutschland) GmbH**
**56112 Lahnstein (DE)**

(72) Erfinder:
• **MÜLLER, Wolfgang**
**14727 Premnitz/ OT Döberitz (DE)**
• **ECKHARDT, Harald**
**56179 Niederwerth (DE)**
• **KÖNIG, Hans-Peter**
**56112 Lahnstein (DE)**
• **FISCHBACH, Nathalie**
**56112 Lahnstein (DE)**
• **THURNHERR, Franz**
**CH-4051 Basel (CH)**

(74) Vertreter: **Mikulecky, Klaus et al**
**Clariant Produkte (Deutschland) GmbH**
**Group Intellectual Property**
**Am Unisys-Park 1**
**65843 Sulzbach (DE)**

(56) Entgegenhaltungen:
**EP-A- 0 008 373      DE-A1- 1 965 379**
**GB-A- 889 617       GB-A- 1 044 378**
**US-A- 3 926 920      US-A- 5 484 837**

• **KIM D-J ET AL: "EFFECTS OF DISPERSING AGENTS ON DISPERSITY AND MECHANICAL PROPERTIES OF CARBON BLACK/PET" POLYMER ENGINEERING & SCIENCE, WILEY, HOBOKEN, NJ, US, Bd. 39, Nr. 3, März 1999 (1999-03), Seiten 500-507, XP000848844 ISSN: 0032-3888**

**Beschreibung**

Die Erfindung betrifft neue Polyester-Farbmittelkonzentrate, erhältlich durch Einbringen eines Copolyesters aus der Klasse der Polyester-Schmelzklebstoffe mit einem definierten Schmelzviskositätsverhalten, zur Steuerung der Schmelzviskosität der Farbmittel-Polyester-Präparation für eine verbesserte Einarbeitung in ein Spinn-Polymer.

Es sind zahlreiche Verfahren zur Herstellung von Polyester-FarbmittelKonzentraten mit verschiedenen Trägermaterialien sowohl mit als auch ohne Dispergierhilfsmittel bekannt.

So beschreibt die EP-A-0 008 373 das Herstellen einer Pigmentpräparation für die Einfärbung linearer Polyester in der Masse, nach welchem man aus 20 bis 80 Teilen Pigment und 80 bis 20 Teilen eines Polyesters, der zwischen 60 und 160°C schmilzt, durch Lösungsmittel-Salzknetung ein Vorkonzentrat herstellt, welches mit einem spinnbaren linearen Polyester verschmolzen und zu Granulat verarbeitet wird.

Die WO 91/13931 beschreibt ein Verfahren zur Herstellung von hochkonzentrierten Pigmentkonzentraten (Masters) mit höchster erreichbarer Farbstärke, wobei eine Mischung aus (A) einem oder mehreren Pigmenten und/oder Füllstoffen, (B) einem oder mehreren anionischen, nichtionischen, kationischen und elektrisch neutralen Netzmitteln und/oder (C) einem oder mehreren Polymerträgern sowie eventuellen weiteren Additiven in einen geeigneten Mischer gegeben wird, worin diese Mischung während einer bestimmten Zeit hohen Scherkräften unterzogen wird, bis die Masse durch die erzeugte Reibungswärme schmilzt.

In der EP-A-0 114 386 wird ein Verfahren zur Herstellung von Polyester-Farbmittelpräparationen beschrieben, wobei der Farbmittelträger aus einem linearen Polyester mit einem Erweichungspunkt von über 60°C und Polybutylenterephthalat mit einer spezifischen Viskosität von 0,5 bis 1,5, gemessen bei einer Polymerkonzentration von 1 g/100 ml in Dichloressigsäure bei 25°C, besteht und die Farbmittelpräparation zwischen 210°C und 150°C, vorzugsweise zwischen 200°C und 160°C, eine Rekristallisationsexotherme von 8 bis 55 Joule/g aufweist und der Farbmittelträger einen Copolyester aus Terephthalsäure/Isophthalsäure und Ethylenglykol enthält.

Die Anwendung von Copolyestern auf Basis von Alkandiolen und organischen Dicarbonsäuren als Heiß-Schmelzklebstoffe ist durch zahlreiche Offenlegungen bekannt.

So ist aus der US-PS 3,926,920 die Herstellung eines hitzestabilen Heiß-Schmelzklebstoffes mit geringer Viskosität und einem Schmelzpunkt nicht größer als 150°C bekannt, der durch Reaktion aus einer Mischung von mindestens einem aliphatischen Glykol mit 2 bis 6 Kohlenstoffatomen und aus einer Mischung mehrerer Dicarbonsäuren oder ihren funktionellen Dicarbonsäurederivaten in bestimmten Konzentrationsverhältnissen gebildet wird.

Die DE-OS 1 594 216 beschreibt die Herstellung von Copolyestermassen als Heiß-Schmelzklebstoff für die Anwendung als Schuhkleber mit einem Schmelzpunkt von 70 bis 160°C und der relativen Viskosität von 1,3 bis 1,6, geprüft in einer Lösung von 0,3 g des Copolyesters in 50 ml eines Lösungsmittelgemisches aus 41,2 % 2,4,6-Trichlorphenol und 58,8 % Phenol bei 25°C, wobei die Bildung des Copolyesters durch Veresterung eines Gemisches von Dicarbonsäuren und einem aliphatischen Diol erfolgt. Dabei sind die Dicarbonsäuren ein Gemisch von Terephthalsäure, Isophthalsäure und einer aliphatischen Dicarbonsäure mit 6 bis 36 Kohlenstoffatomen und der Hauptmolanteil des aliphatischen Diols ein Butandiol mit mindestens 80 Mol-%.

Bei der Herstellung von Farbstoff- und/oder Pigment-Konzentraten mit Polyester-Trägersystemen werden die maximalen Konzentrationen der Farbstoffe insbesondere durch ihr Löslichkeitsverhalten im Trägersystem, ihren Schmelzpunkt sowie ihren Einfluss auf das Viskositätsverhalten im Trägersystem bestimmt. Die Konzentration von organischen oder anorganischen Pigmenten für den Erhalt von qualitativ akzeptablen Masters ist vorrangig abhängig vom Dispergierverhalten im Trägersystem, der Partikelgröße, der Benetzbarkeit durch das Trägersystem und in wesentlichem Maße vom rheologischen (Fließ)verhalten des Masterbatch-Systems bei den Herstellungs- und Verarbeitungsbedingungen.

Bei Ruß-Polyester-Präparationen liegt deshalb die praktikable Grenze der Rußkonzentration im Master, aufgrund des Oberflächen-Volumen-Verhältnisses der Rußpartikel, der geringen Benetzbarkeit und der damit verbundenen hohen Schmelz- oder Strukturviskosität (dynamischer Zähigkeit) des Masters bei ca. 30%.

Oftmals erfolgt bei der Masterbatch-Herstellung mit Pigmenten und/oder Farbstoffen auf Basis von Polyester-Trägersystemen durch Scherung bei der Extrusion oder Knetung, auch nach vorheriger Intensiv-(Heiß- oder Warm-) Mischung, Langsam-Mischung oder Einzelkomponenten-Zugabe, eine unerwünschte Degradation des Polyester-Trägers. Diese Polymerkettenbrüche führen zu einer Reduzierung der spezifischen Viskosität (Intrinsic-Viskosität) des Trägersystems und in der Folge auch zu einer signifikanten Reduzierung der spezifischen Viskosität (Intrinsic-Viskosität) des eingefärbten Spinnpolymeren mit den Auswirkungen einer verminderten Spinnbarkeit und einer niedrigeren Qualität. Eine Abhilfe, insbesondere die Reduzierung der spezifischen Viskosität betreffend, kann teilweise durch die Verwendung von Polyester-Trägermaterialien mit höheren spezifischen Viskositäten erreicht werden. Die gezielte Anpassung der Schmelzviskosität des Masters an die Schmelzviskosität des Polyester-Spinnpolymeren ist mit den bekannten Verfahrensweisen jedoch nicht möglich.

Ziel der Erfindung ist daher die Bereitstellung eines Verfahrens zur Anpassung der Schmelzviskosität (dynamische Zähigkeit) und der spezifischen Viskosität (Intrinsic-Viskosität) von farbmittelhaltigen Polyester-Masters an die Schmelzrheologie von undotierten, üblichen Spinnpolymeren-zur-Polyester-Faser- und Polyester-Filament-Herstellung.

Erfindungsgemäß wird die Aufgabe dadurch gelöst, dass den üblicherweise verwendeten Komponenten eines Polyester-Farbmittel-Konzentrates (Master), wie Ruß und/oder Pigmente und/oder Farbstoffe, hier als Farbmittel bezeichnet, und Polyester-Träger, sowie gegebenenfalls auch Dispergierhilfsmittel(n), vor oder während dem Aufschmelzen der einzelnen Komponenten oder der Mischung durch Extrusion oder Knetung ein nachstehend definierter Copolyester aus der Klasse der Polyester-Schmelzklebstoffe zugesetzt wird.

Gegenstand der Erfindung ist ein Polyester-Farbmittel-Konzentrat, enthaltend

(a) ein Polyester-Trägermaterial,
(b) ein Farbmittel aus der Gruppe der Farbstoffe und/oder Pigmente,
(c) 0,1 bis 2 Gewichtsteile, vorzugsweise 0,5 bis 1,5 Gewichtsteile, pro Gewichtsteil des Farbmittels, eines Copolyesters umfassend das Reaktionsprodukt aus

(A) mindestens einem aliphatischen primären zweiwertigen Alkohol mit 2 bis 6 C-Atomen und
(B) Dicarbonsäuren aus der Gruppe Phthalsäure, Terephthalsäure, Isophthalsäure und/oder Sebacinsäure;

und wobei der Copolyester gekennzeichnet ist durch

(i) einen Schmelzbereich zwischen 120 und 160°C, bevorzugt zwischen 130 und 150°C;
(ii) eine Schmelzviskosität SV von 12 bis 126 Pa·s, gemessen bei 190°C und 2,16 kg gemäß ISO 1133, und
(iii) einen Schmelzviskositätsfaktor SF von -2,3 bis -0,3 Pa·s/grd, bestimmt bei einer Temperaturerhöhung im Bereich von 160°C bis 240°C bei einer Scherrate von 10 s$^{-1}$.

Der Schmelzviskositäts-Faktor SF bezeichnet die Abnahme der Schmelzviskosität SV in Pa·s pro Grad Temperaturerhöhung im Bereich von 160°C (433 K) bis 240°C (513 K) bei einer Scherrate von 10 s$^{-1}$ (Platte/Platte-Viskosimeter, z.B. ®Rheometer SR 200 der Firma Rheometrics). Er kann durch folgende Gleichung beschrieben werden:

$$\text{SF [Pa·s/grd]} = \frac{\text{Scherviskosität SV [Pa·s]}}{\text{Temperaturänderung } \triangle T \text{ [grd]}} = \frac{\exp(a \cdot T_1 + 14{,}1) - \exp(a \cdot T_2 + 14{,}1)}{(T_1 - T_2)}$$

mit a = -0,025 bis -0,020, vorzugsweise a = -0,023 und $T_{1/2}$ in Kelvin im Bereich von 433 K bis 513 K.

Das Polyester-Trägermaterial (a) kann ein für Farbmittel-Masterbatche üblicher Farbmittelträger sein. Geeignete Polyester sind lineare Polyester aus aromatischen und/oder aliphatischen Dicarbonsäuren mit aliphatischen Diolen. Dicarbonsäuren sind z.B. Phthal-, Terephthal-, Isophthal-, Azelain-, Sebacin- oder Adipinsäure. Als Glykole kommen in Betracht: Ethylenglykol, 1,3-Propandiol, 1,4-Butandiol, 1,4-Di(hydroxymethyl)-cyclohexan und Neopentylglykol. Bevorzugte Polyester-Trägermaterialien bestehen im Wesentlichen aus Polyethylenterephthalat und/oder Polybutylenterephthalat und/oder Polytrimethylenterephthalat und/oder Copolyester, basierend auf einem Gemisch mehrerer der genannten Dicarbonsäuren und einem aliphatischen Alkandiol.

Die als Trägermaterial verwendeten Polyester können einen Schmelzbereich von etwa 70 bis 300°C haben.

Erfindungsgemäß geeignete Polyester-Trägermaterialien werden z.B. in der DE-A-19 65 379 und DE-A-11 83 195 genannt.

Als Farbmittel (b) kommen organische und anorganische Pigmente sowie polymerlösliche, -teillösliche oder -unlösliche Farbstoffe in Betracht. Als organische Pigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z.B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.

Als beispielhafte Auswahl besonders bevorzugter organischer Pigmente sind dabei Rußpigmente, wie z.B. Gas- oder Furnaceruße; Monoazo- und Disazopigmente sowie Phthalocyanin-, Anthrachinon- und Chinacridon-Pigmente zu nennen.

Geeignete anorganische Pigmente sind beispielsweise Titan dioxide, Zinksulfide, Eisenoxide, Chromoxide, Ultramarin, Nickel- oder Chromanti montitanoxide, Cobaltoxide, Mischoxide des Cobalts und Aluminiums, Bismutvanadate sowie Verschnittpigmente.

Als organische Farbstoffe kommen Säurefarbstoffe, Direktfarbstoffe, Schwefelfarbstoffe und deren Leukoform, Metallkomplexfarbstoffe oder Reaktivfarbstoffe in Betracht.

Die Menge des Farbmittels im erfindungsgemäßen Polyester-Farbmittel-Konzentrat kann zwischen 5 und 60, bevorzugt zwischen 15 und 40 Gew.-%, bezogen auf das Gesamtgewicht des Polyester-Farbmittel-Konzentrats, betragen.

Als Copolyester (c) kann ein in Fachkreisen als Polyester-Schmelzklebstoff ("Hot melt adhesive") bekanntes Produkt eingesetzt werden, sofern es die genannten Schmelzeigenschaften (i) und Viskositäten (ii) und (iii) aufweist. Geeignete Copolyester sind z.B. Reaktionsprodukte aus (A) mindestens einem aliphatischen primären Glykol mit 2 bis 6 C-Atomen, und (B) einer Mischung (100 Mol-%) von 25 bis 65, vorzugsweise 30 bis 55, Mol-% Terephthalsäure, 25 bis 65, vorzugsweise 30 bis 55, Mol-% Isophthalsäure und 5 bis 20, vorzugsweise 5 bis 15, Mol-% Phthalsäure.

Weitere geeignete Copolyesters sind z.B. Reaktionsprodukte aus (A) mindestens einem aliphatischen primären Glykol mit 2 bis 6 C-Atomen, und (B) einer Mischung (100 Mol-%) von 40 bis 55 Mol-% Terephthalsäure, 25 bis 50 Mol-% Isophthalsäure und 7 bis 23 Mol-% Sebacinsäure.

Die Glykol-Komponente kann ein einziges Glykol oder eine Kombination verschiedener Glykole sein, wie z.B. 1,2-Ethandiol, 1,3-Propandiol, 1,4-Butandiol, 1,6-Hexandiol und Neopentylglykol. Unabhängig davon, ob ein einzelnes Glykol oder eine Mischung mehrerer Glykole eingesetzt wird, muss die Glykol-Komponente so gewählt werden, dass die geforderten Viskositäten und der Schmelzbereich des Copolyesters erreicht werden. Besonders bevorzugt ist 1,4-Butandiol oder 1,6-Hexandiol sowie eine Kombination davon mit Ethylenglykol oder Neopentylglykol.

Die Herstellung solcher Copolyester ist bekannt und beispielsweise in der US-PS 3,926,920 beschrieben.

Die erfindungsgemäßen Polyester-Farbmittel-Konzentrate können weiterhin übliche Dispergierhilfsmittel insbesondere aus der Gruppe der Polyester-Wachse und/oder Copolyester enthalten, die nicht der spezifischen erfindungsgemäßen Charakteristik der Hot-melt-adhesives entsprechen, und vorzugsweise in Mengen von 0,5 bis 30 Gew.-%, bezogen auf das Gesamtgewicht des Farbmittel-Konzentrats, enthalten sind.

Durch die erfindungsgemäße Zugabe des Copolyesters kann überraschenderweise die Schmelzviskosität des Polyester-Farbmittel-Konzentrates gesteuert und der Schmelzviskosität eines unpigmenti erten Polyester-Spinn-Rohmaterials angepasst werden. Überraschenderweise hat sich gezeigt, dass damit sogar hochpigmentierte Polyester-Masters mit g leichen oder ähnlichen rheologischen Eigenschaften wie unpigmentierte Polyester-Spinnpolymere hergestellt werden können, die deutlich besser und gleichmäßiger in das Spinnpolymere einarbeitbar sind.

Gegenstand der vorliegenden Erfindung ist auch ein Verfahren zur Herstellung der besagten Polyester-Farbmittel-Konzentrate durch Vermischen der Komponenten (a), (b) und (c), Aufschmelzen, Homogenisieren, Dispergieren, Abkühlen und Granulieren. Die einzelnen Verfahrensschritte zur Herstellung von Farbmittelkonzentraten (Masterbatches) sind dem Fachmann allgemein bekannt.

Die erfindungsgemäßen Polyester-Farbmittel-Konzentrate sind besonders gut einsetzbar bei der Spinnfärbung von Polyester-Fasern oder Polyester-Filamenten, insbesondere für das Einbringen mittels Seitenstrom-Extruder in die Polyester-Spinnschmelze oder über eine vorherige Mischung der Granulate von Polyester-Farbmittel-Konzentrat (Masterbatch) und Polyester-Spinngranulat und anschließendes gemeinsames Aufschmelzen im Spinnextruder.

Vergleichsbeispiel

Zur Herstellung eines Polyester-Ruß-Masterbatches zur Einfärbung von PET-Stapelfasern direkt vor dem Verspinnen wurde nach üblicher Verfahrensweise eine Pulvermischung, bestehend aus 30 Gew.-% Flamm-Ruß, 8 Gew.-% eines Dispergierhilfsmittels sowie 62 Gew.-% PET-Trägermaterial in einem Extruder aufgeschmolzen, dispergiert und homogenisiert, durch eine Lochplatte gepresst, zu Monofilament-Strängen abgezogen und nach dem Abkühlen in einem Granulator zu Granulaten geschnitten.

Das so hergestellte Polyester-Ruß-Konzentrat wies eine spezifische Lösungsviskosität, bezogen auf enthaltenes PET-Trägermaterial, von 547 auf, gemessen bei einer Polymerkonzentration von 1 g/100 ml in Dichloressigsäure bei 25°C (298K). Die mittels Platte/Platte-Viskosimeter (Rheometer SR 200 der Firma Rheometrics) ermittelte Schmelzviskosität betrug 3275 [Pa·s] (bei 280°C = 553 K und einer Scherrate von 10 s$^{-1}$).

Eine Einbringung dieses Polyester-Ruß-Konzentrates mittels Seitenstrom-Tech nik, d.h. Aufschmelzen mittels Aufschmelzextruder und Injektion in einer beheizten Rohrleitung in den Schmelzestrom des Spinnpolymeren vor den Spinndüsen, war aufgrund der sehr hohen Schmelzviskosität von 3275 [Pa·s] nicht möglich. Bedingt durch den sehr hohen Druckverlust, verursacht durch die hohe Schmelzviskosität des Masterbatches, kam es zu Verstopfungen in der Rohrleitung und zum Ausfall der Seitenstrom-Linie mit der Folge von Unterbrechüngen des gesamten Spinnprozesses.

Beispiel 1:

Es wurde ein Polyester-Ruß-Masterbatch hergestellt, wobei jedoch eine Pulvermischung aus 30 Gew.-% Flamm-Ruß, 42 Gew.-% des PET-Trägermaterials, 20 Gew.-% eines Copolyesters aus der Klasse der Hot-Melt-Adhesives und 8 Gew.-% eines Dispergierhilfsmittels eingesetzt wurden. Das Verhältnis des zugegebenen Copolyesters betrug erfindungsgemäß 67 Gew.-% Copolyester, bezogen auf die eingesetzte Menge Flamm-Ruß.

Als Copolyester wurde ein Kondensationsprodukt aus 1,4-Butandiol als Glykol-Komponente, und 55 Mol-% Terephthalsäure, 35 Mol-% Isophthalsäure und 10 Mol-% Sebacinsäure als molare Mengenanteile der Dicarbonsäure-Komponente, erhältlich gemäß DE-A-15 94 216, Beispiel 4, eingesetzt.

Die erfindungsgemäße Mischung wurde anschließend wie im Vergleichsbeispiel beschrieben, extrudiert und granuliert. Das erfindungsgemäße Polyester-Ruß-Masterbatch-Granulat hatte eine spezifische Lösungsviskosität von 563, gemessen bei einer Polymer-Trägerkonzentration von 1 g/100 ml in Dichloressigsäure bei 25°C (298 K), und eine Schmelzviskosität von 181 [Pa·s] (bestimmt mittels Platte/Platte-Viskosimeter SR 200 der Firma Rheometrics bei 280°C = 553 K und einer Scherrate von 10 s$^{-1}$) und war im Gegensatz zum Vergleichsbeispiel ohne Anstieg des Schmelzedruckes in der Konzentratleitung der Seitenstrom-Linie problemlos in den Schmelzestrom des Spinnpolymeren vor den Spinndüsen zur Einfärbung der PET-Stapelfasern einarbeitbar.

Beispiel 2

Eine Mischung aus 28 Gew.-% Flamm-Ruß, 60 Gew.-% Polybutylenterephthalat (PBT) und 12 Gew.-% eines Copolyesters aus der Klasse der handelsüblichen Hot-Melt-Adhesives (43 Gew.-% Copolyester, bezogen auf die eingesetzte Menge Ruß-Pigment) mit einem Schmelzpunkt von 141°C (414 K), einer Schmelzviskosität SV von 30 Pa·s (bestimmt bei 190°C (463 K) und einer Gewichtsbelastung von 2,16 kg (gemäß Prüfung nach ISO 1133) und einem Schmelzviskositäts-Faktor SF = -0,66 [Pa·s/grd] gemäß SV [Pa·s] =exp(-0,023 · T + 14,1), bestimmt mittels Platte/Platte-Viskosimeter SR 200 der Firma Rheometrics im Temperaturbereich von 160°C (433 K) bis 240°C (513 K) und bei einer Scherrate von 10 s$^{-1}$, wurde ohne Zugabe weiterer Additive oder Dispergierhilfsmittel als Pulvermischung in einem Extruder aufgeschmolzen, dispergiert und homogenisiert und anschließend die extrudierten Monofilament-Stränge nach Abkühlung im Wasserbad zu Granulaten geschnitten.

Die erfindungsgemäß hergestellten PBT-Ruß-Konzentrat-Granulate wiesen eine spezifische Lösungsviskosität von 873 auf, bestimmt bei einer PBT/Copolyester-Konzentration von 1 g/100 ml in Dichloressigsäure bei 25°C (298 K), und haben eine Schmelzviskosität von 276 [Pa·s], ermittelt durch Platte/Platte-Viskosimeter SR 200 der Firma Rheometrics bei 280°C = 553 K und einer Scherrate von 10 s$^{-1}$.

Das erfindungsgemäß hergestellte PBT-Ruß-Masterbatch konnte problemlos ohne Druckanstieg in der Konzentrat-Leitung der Seitenstrom-Linie in das PET-Spinnmaterial eingearbeitet werden.

Die Gleichmäßigkeit der Filamentfärbung wurde ebenfalls verbessert bei unverminderter Gewährleistung aller textil-physikalischen Kennwerte der so eingefärbten PET-Filamente.

Beispiel 3

Eine Pulvermischung, bestehend aus 30 Gew.-% Flamm-Ruß, 53 Gew.-% einer Mischung aus Polyethylenterephthalat und Polybutylenterephthalat (Mischungsverhältnis 1:1) sowie erfindungsgemäß 17 Gew.-% des Copolyesters gemäß Beispiel 2 (57 Gew.-% Copolyester, bezogen auf die eingesetzte Menge Ruß-Pigment) wurden entsprechend der vorstehend beschriebenen Verfahrensweise in einem Extruder aufgeschmolzen, dispergiert und homogenisiert, anschließend zu Monofilament-Strängen verpresst und nach der Kühlung zu Granulaten zerkleinert.

Das so hergestellte Polyester-Ruß-Masterbatch wies eine spezifische Lösungsviskosität von 790 auf, bestimmt bei einer Gesamt-Polymer-Konzentration von 1 g/100 ml in Dichloressigsäure bei 25°C (298 K), und hatte eine Schmelzviskosität von 257 [Pa·s], bestimmt mittels Viskosimeter SR 200 wie vorstehend beschrieben, und war problemlos über Seitenstrom-Technik ohne Druckanstieg in der Konzentrat-Leitung zur Einfärbung einer Polyesterschmelze vor dem Verspinnen verarbeitbar.

Beispiel 4

Eine Pulvermischung, bestehend aus 30 Gew.-% C.I. Pigment Green 7, 63 Gew.-% Polybutylenterephthalat sowie erfindungsgemäß 7 Gew.-% des Copolyesters gemäß Beispiel 2 (23 Gew.-% Copolyester, bezogen auf die eingesetzte Menge Pigment) wurden ohne Zusatz von Dispergiermitteln in einem Kneter vermischt, aufgeschmolzen, dispergiert und homogenisiert. Nach dem Austrag aus dem Kneter wurde das Polyester-Farbmittel-Konzentrat zu Granulat zerkleinert.

Das so hergestellte Polybutylenterephthalat-Pigment-Konzentrat wies eine spezifische Lösungsviskosität von 927, bestimmt bei einer Polymer-Konzentration von 1 g/100 ml in Dichloressigsäure bei 25°C (298 K), und eine Schmelzviskosität von 224 [Pa·s], bestimmt mittels Viskosimeter SR 200 wie vorstehend beschrieben, auf.

Das erfindungsgemäße Konzentrat war zur Einfärbung von Polyester-Stapelfasern und Polyester-Filamenten mittels Seitenstrom-Technik ohne Druckanstieg in den Zuleitungen verarbeitbar.

**Patentansprüche**

1.  Polyester-Farbmittel-Konzentrat, enthaltend

    (a) ein Polyester-Trägermaterial,
    (b) ein Farbmittel aus der Gruppe der Farbstoffe und/oder Pigmente,
    (c) 0,1 bis 2 Gewichtsteile pro Gewichtsteil des Farbmittels, eines Copolyesters umfassend das Reaktionsprodukt aus

    (A) mindestens einem aliphatischen primären zweiwertigen Alkohol mit 2 bis 6 C-Atomen und
    (B) Dicarbonsäuren aus der Gruppe Phthalsäure, Terephthalsäure, Isophthalsäure und/oder Sebacinsäure;

    und wobei der Copolyester **gekennzeichnet ist durch**

    (i) einen Schmelzbereich zwischen 1 20 und 160°C;
    (ii) eine Schmelzviskosität SV von 12 bis 126 Pa·s, gemessen bei 190°C und 2,16 kg gemäß ISO 1133, und
    (iii) einen Schmelzviskositätsfaktor SF von -2,3 bis -0,3 Pa·s/grd, bestimmt bei einer Temperaturerhöhung im Bereich von 160°C bis 240°C bei einer Scherrate von 10 s$^{-1}$.

2.  Polyester-Farbmittel-Konzentrat nach Anspruch 1, enthaltend 0,5 bis 1,5 Gewichtsteile des Copolyesters (c) pro Gewichtsteil des Farbmittels.

3.  Polyester-Farbmittel-Konzentrat nach Anspruch 1 oder 2, **dadurch gekennzeichnet, dass** der Schmelzbereich des Copolyesters zwischen 130 und 150°C liegt.

4.  Polyester-Farbmittel-Konzentrat nach einem oder mehreren der Ansprüche 1 bis 3, **dadurch gekennzeichnet, dass** das Farbmittel (b) ein oder mehrere Pigmente aus der Gruppe der Russpigmente, Monoazopigmente, Disazopigmente, Phthalocyaninpigmente, Anthrachinonpigmente und Chinacridonpigmente ist.

5.  Polyester-Farb mittel-Konzentrat nach einem oder mehreren der Ansprüche 1 bis 4, dadurch geke nnzeichnet, dass die Menge des Farbmittels (b) zwischen 5 und 60 Gew.-%, bezogen auf das Gesamtgewicht des Polyester-Farbmittel-Konzentrats, beträgt.

6.  Polyester-Farbimittel-Konzentrat nach einem oder mehreren der Ansprüche 1 bis 5, **dadurch gekennzeichnet, dass** der Copolyester ein Reaktionsprodukt aus (A) mindestens einem aliphatischen primären Glykol mit 2 bis 6 C-Atomen, und (B) einer Mischung (100 Mol-%) von 25 bis 65 Mol-% Terephthalsäure, 25 bis 65 Mol-% Isophthalsäure und 5 bis 20 Mol-% Phthalsäure ist.

7.  Polyester-Farbmittel-Konzentrat nach einem oder mehreren der Ansprüche 1 bis 5, **dadurch gekennzeichnet, dass** der Copolyester ein Reaktionsprodukt aus (A) mindestens einem aliphatischen primären Glykol mit 2 bis 6 C-Atomen, und (B) einer Mischung (100 Mol-%) von 40 bis 55 Mol-% Terephthalsäure, 25 bis 50 Mol-% Isophthalsäure und 7 bis 23 Mol-% Sebacinsäure ist.

8.  Polyester-Farbmittel-Konzentrat nach einem oder mehreren der Ansprüche 1 bis 7, **dadurch gekennzeichnet, dass** die Komponente (A) ein Glykol aus der Gruppe 1,2-Ethandiol, 1,3-Propandiol, 1,4-Butandiol, 1,6-Hexandiol, Neopentylglykol oder eine Kombination davon ist.

9.  Polyester-Farbmittel-Konzentrat nach einem oder mehreren der Ansprüche 1 bis 8, enthaltend 0,5 bis 30 Gew.-%, bezogen auf das Gesamtgewicht des Polyester-Farbmittel-Konzentrats, eines oder mehrerer Dispergierhilfsmittel.

10.  Verfahren zur Herstellung eines Polyester-Farbmittel-Konzentrats nach einem oder mehreren der Ansprüche 1 bis 9 durch Vermischen der Komponenten (a), (b) und (c) und gegebenenfalls des Dispergierhilfsmittels, Aufschmelzen, Dispergieren, Homogenisieren, Abkühlen und Granulieren.

11.  Verwendung eines Polyester-Farbmittel-Konzentrats nach einem oder mehreren der Ansprüche 1 bis 8 zur Spinnfärbung von Polyester-Fasem und Polyester-Filamenten.

**Claims**

1. A polyester colorant concentrate comprising

    (a) a polyester carrier material,
    (b) a colorant from the group of dyes and/or pigments,
    (c) 0.1 to 2 parts by weight per part by weight of colorant of a copolyester comprising the reaction product of

        (A) at least one aliphatic primary dihydric alcohol having 2 to 6 carbon atoms and
        (B) dicarboxylic acids from the group phthalic acid, terephthalic acid, isophthalic acid and/or sebacic acid;

    said copolyester having

        (i) a melting range between 120 and 160°C;
        (ii) a melt viscosity MV of 12 to 126 Pa·s, measured at 190°C and 2.16 kg in accordance with ISO 1133; and
        (iii) a melt viscosity factor MF of -2.3 to -0.3 Pa·s/deg, determined with a temperature increase in the range from 160°C to 240°C at a shear rate of 10 s$^{-1}$.

2. The polyester colorant concentrate as claimed in claim 1, containing 0.5 to 1.5 parts by weight of copolyester (c) per part by weight of colorant.

3. The polyester colorant concentrate as claimed in claim 1 or 2, wherein the melting range of the copolyester is between 130 and 150°C.

4. The polyester colorant concentrate as claimed in one or more of claims 1 to 3, wherein the colorant (b) comprises one or more pigments from the group of carbon black pigments, monoazo pigments, disazo pigments, phthalocyanine pigments, anthraquinone pigments, and quinacridone pigments.

5. The polyester colorant concentrate as claimed in one or more of claims 1 to 4, wherein the amount of colorant (b) is between 5% and 60% by weight, based on the total weight of the polyester colorant concentrate.

6. The polyester colorant concentrate as claimed in one or more of claims 1 to 5, wherein the copolyester is a reaction product of (A) at least one aliphatic primary glycol having 2 to 6 carbon atoms, and (B) a mixture (100 mol%) of 25 to 65 mol% terephthalic acid, 25 to 65 mol% isophthalic acid, and 5 to 20 mol% phthalic acid.

7. The polyester colorant concentrate as claimed in one or more of claims 1 to 5, wherein the copolyester is a reaction product of (A) at least one aliphatic primary glycol having 2 to 6 carbon atoms, and (B) a mixture (100 mol%) of 40 to 55 mol% terephthalic acid, 25 to 50 mol% isophthalic acid, and 7 to 23 mol% sebacic acid.

8. The polyester colorant concentrate as claimed in one or more of claims 1 to 7, wherein component (A) is a glycol from the group of 1,2-ethanediol, 1,3-propanediol, 1,4-butanediol, 1,6-hexanediol, and neopentyl glycol, or a combination thereof.

9. The polyester colorant concentrate as claimed in one or more of claims 1 to 8, containing 0.5% to 30% by weight, based on the total weight of the polyester colorant concentrate, of one or more dispersing assistants.

10. A process for producing a polyester colorant concentrate as claimed in one or more of claims 1 to 9 by mixing components (a), (b), and (c) and, where appropriate, the dispersing assistant, and carrying out melting, dispersing, homogenizing, cooling, and pelletizing.

11. The use of a polyester colorant concentrate as claimed in one or more of claims 1 to 8 for the spin coloring of polyester fiber and polyester filament.

**Revendications**

1. Concentré de polyester-agent colorant, contenant

(a) une matière de support polyester,
(b) un agent colorant choisi dans le groupe des colorants et/ou des pigments,
(c) 0,1 à 2 parties en poids par partie en poids de l'agent colorant, d'un copolyester comprenant le produit de réaction

(A) d'au moins un alcool aliphatique primaire dihydrique ayant de 2 à 6 atomes de carbone et
(B) d'acides dicarboxyliques choisis dans le groupe constitué par l'acide phtalique, l'acide téréphtalique, l'acide isophtalique et/ou l'acide sébacique ;

et le copolyester étant **caractérisé par**

(i) un domaine de fusion compris entre 120 et 160 °C ;
(ii) une viscosité à chaud SV de 12 à 126 Pa.s, mesurée à 190 °C et avec un poids de 2,16 kg selon ISO 1133, et
(iii) un facteur de viscosité à chaud SF de -2,3 à - 0,3 Pa.s/grd, déterminé pour une élévation de température dans la plage de 160 °C à 240 °C à une vitesse de cisaillement de 10 s$^{-1}$.

2. Concentré de polyester-agent colorant selon la revendication 1, contenant 0,5 à 1,5 partie en poids du copolyester (c) par partie en poids de l'agent colorant.

3. Concentré de polyester-agent colorant selon la revendication 1 ou 2, **caractérisé en ce que** le domaine de fusion du copolyester est compris entre 130 et 150 °C.

4. Concentré de polyester-agent colorant selon une ou plusieurs des revendications 1 à 3, **caractérisé en ce que** l'agent colorant (b) consiste en un ou plusieurs pigments choisis dans le groupe des pigments noir de carbone, pigments monoazoïques, pigments disazoïques, pigments phtalocyanine, pigments anthraquinoniques et pigments quinacridone.

5. Concentré de polyester-agent colorant selon une ou plusieurs des revendications 1 à 4, **caractérisé en ce que** la quantité de l'agent colorant (b) est comprise entre 5 et 60 % en poids, par rapport au poids total du concentré de polyester-agent colorant.

6. Concentré de polyester-agent colorant selon une ou plusieurs des revendications 1 à 5, **caractérisé en ce que** le copolyester est un produit de réaction de (A) au moins un glycol aliphatique primaire ayant de 2 à 6 atomes de carbone, et (B) un mélange (100 % en moles) de 25 à 65 % en moles d'acide téréphtalique, 25 à 65 % en moles d'acide isophtalique et 5 à 20 % en moles d'acide phtalique.

7. Concentré de polyester-agent colorant selon une ou plusieurs des revendications 1 à 5, **caractérisé en ce que** le copolyester est un produit de réaction de (A) au moins un glycol aliphatique primaire ayant de 2 à 6 atomes de carbone, et (B) un mélange (100 % en moles) de 40 à 55 % en moles d'acide téréphtalique, 25 à 50 % en moles d'acide isophtalique et 7 à 23 % en moles d'acide sébacique.

8. Concentré de polyester-agent colorant selon une ou plusieurs des revendications 1 à 7, **caractérisé en ce que** le composant (A) est un glycol choisi dans le groupe constitué par le 1,2-éthanediol, le 1,3-propanediol, le 1,4-butanediol, le 1,6-hexanediol, le néopentylglycol ou une association de ceux-ci.

9. Concentré de polyester-agent colorant selon une ou plusieurs des revendications 1 à 8, contenant de 0,5 à 30 % en poids, par rapport au poids total du concentré de polyester-agent colorant, d'un ou plusieurs adjuvant(s) de dispersion.

10. Procédé pour la préparation d'un concentré de polyester-agent colorant selon une ou plusieurs des revendications 1 à 9, par mélange des composants (a), (b) et (c) et éventuellement de l'adjuvant de dispersion, fusion, dispersion, homogénéisation, refroidissement et granulation.

11. Utilisation d'un concentré de polyester-agent colorant selon une ou plusieurs des revendications 1 à 8, pour la teinture dans la masse de fibres de polyester et de filaments de polyester.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0008373 A
- WO 9113931 A
- EP 0114386 A
- US PS3926920 A
- DE OS1594216 A
- DE 1965379 A
- DE 1183195 A
- DE 1594216 A